(19) Europäisches Patentamt
European Patent Office
Office européen des brevets

(11) EP 0 385 384 B1

(12) EUROPÄISCHE PATENTSCHRIFT

(45) Veröffentlichungstag und Bekanntmachung des Hinweises auf die Patenterteilung:
**13.08.1997 Patentblatt 1997/33**

(51) Int Cl.[6]: **G06T 7/20**

(21) Anmeldenummer: **90103769.7**

(22) Anmeldetag: **27.02.1990**

(54) **Verfahren zur Detektion bewegter Objekte in digitaler Bildfolge**

Detection process of moving objects in a sequence of digital images

Procédé de détection d'objets en mouvement dans une séquence d'images binaires

(84) Benannte Vertragsstaaten:
**AT BE CH DE DK ES FR GB GR IT LI LU NL SE**

(30) Priorität: **01.03.1989 DE 3906483**

(43) Veröffentlichungstag der Anmeldung:
**05.09.1990 Patentblatt 1990/36**

(60) Teilanmeldung: **96108442.3**

(73) Patentinhaber: **SIEMENS AKTIENGESELLSCHAFT**
**80333 München (DE)**

(72) Erfinder:
- **Karmann, Klaus-Peter, Dr.**
**D-8000 München 40 (DE)**
- **von Brandt, Achim, Dr.**
**D-8000 München 81 (DE)**

(56) Entgegenhaltungen:
**EP-A- 0 224 253**

EP 0 385 384 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Die Erfindung betrifft ein Verfahren zur Detektion bewegter Objekte in digitaler Bildfolge.

Bei verschiedenen Anwendungen des maschinellen Sehens (Szenenanalyse, autonome Fahrzeugsteuerung, Überwachungsaufgaben) kommt es darauf an, durch Auswertung einer zeitlichen Folge digitaler Bilder bewegte Objekte zu entdecken, ihre Form und Lage zu bestimmen und ihre Bewegung zu verfolgen. Dies geschieht ganz allgemein durch eine geeignete Segmentierung der Bildfolge, bei der innerhalb eines Bildes Segmente zu Objekten gruppiert werden. Objekte in verschiedenen Bildern werden miteinander identifiziert und die entsprechenden Segmentgruppen zu Trajektorien zusammengefaßt. Die auf diese Weise erzeugten Folgen von Segmentbildern und Objekttrajektorien können danach einer weiteren Auswertung durch den Menschen oder durch intelligente Systeme zur Szenenanalyse zugänglich gemacht werden.

Zur Erkennung und Verfolgung von Objekten sind deshalb folgende Probleme zu lösen:

1. Die Trennung der bewegten Bildbereiche vom unbewegten Hintergrund,
2. die Trennung der Objekte untereinander, d. h. eine Segmentierung des bewegten Bildbereichs, so daß jedem Bewegtobjekt eine Gruppe von Segmenten zugeordnet werden kann, und
3. die korrekte Zuordnung von Segmentgruppen zwischen den Bildern der Folge zu Objekttrajektorien (Korrespondenzproblem).

Neben den Objektbewegungen tragen auch Beleuchtungsänderungen und verschiedene Rauschquellen zur zeitlichen Änderung der Helligkeit bei. Ein technisch verwendbares System zur Objektverfolgung muß Objektbewegungen von anderen dynamischen Prozessen unterscheiden können. Deshalb kommt der Bewegungsschätzung eine zentrale Rolle in der Objektverfolgung zu. Die Kenntnis der Bewegungsparameter der detektierten Objekte ist auch eine wichtige Voraussetzung für eine korrekte Zusammenfassung der Objektmaskensegmente zu Objekten und für die Lösung des Korrespondenzproblems.

Die bisher bekannten Verfahren zur Verfolgung allgemeiner, unabhängig bewegter Objekte lassen sich in folgende zwei Klassen einteilen:

a) Änderungsdetektion mit Differenzbildern zeitlich benachbarter Bilder

Die zu dieser Klasse gehörenden Verfahren (P. Spoer, "Moving Object Detection by Temporal Frame Difference Accumulation", in Digital Signal Processing 84, V. Cappellini and A.G. Constantinides (eds.), Florence 1984, pp. 900-907 und J. Wiklund, G. H. Granlund, "Image Sequence Analysis for Object Tracking", Proceedings of the 5th Scand. Conf. on Image Analysis, Stockholm, June 1987, pp. 641-648) basieren auf der Auswertung von Differenzbildern aus den zeitlich aufeinanderfolgenden Bildern der Folge. Diese Differenzbilder werden einer Schwellenbewertung unterzogen, wodurch ein der Schwellwertentscheidung entsprechendes Binärbild erzeugt wird. Dieses enthält im allgemeinen noch ein Restrauschen (Rauschpixel), das durch geeignete Filteroperationen (Medianfilter, Tiefpaß, Löschen aller Segmente, deren Größe unterhalb einer Schwelle liegt) eliminiert werden kann.

Ziel dieses Vorgehens ist die Trennung der bewegten Bildbereiche vom Hintergrund und die Gewinnung von Objektmasken, deren Segmente die Form und Lage der Objekte kenntlich machen. Zwei Probleme führen dabei im allgemeinen zu Schwierigkeiten:

1. Selbst unter idealen Bedingungen (völlige Rauschfreiheit, Objekte mit kontrastreichen, durchgehenden Texturen, die sich deutlich vom Hintergrund abheben) stehen die Segmente der so erzeugten Objektmasken in keinem einfachen, auf eindeutige Weise rekonstruierbaren Zusammenhang mit der Anzahl der Objekte und ihrer Form. Das so erhaltene Binärbild entspricht vielmehr der Vereinigungsmenge zweier Binärbilder, welche die Objektpositionen zu zwei verschiedenen Zeitpunkten wiedergeben.

2. Gebiete mit geringen Helligkeitsgradienten im Inneren von Objekten führen zu Löchern in den entsprechenden Segmenten der Objektmasken. Ein Segment kann auch in mehrere Teile zerfallen.

b) Segmentierung von Bewegungsvektorfeldern

Ein bewegtes Objekt entspricht einem Bildsegment, in dessen Inneren das Bewegungsvektorfeld stetig ist und auf dessen Rand das Bewegungsvektorfeld im allgemeinen Unstetigkeitsstellen besitzt. Diese Idee liegt einigen Verfahren zugrunde, die ausgehend von den Bildern der Folge mit Hilfe verschiedener Verfahren (A. v. Brandt, W. Tengler, "Obtaining smoothed optical flow fields by modified block matching", The 5th Scand. Conf. on Image Analysis, Stockholm, June 2-5, 1987, Proccedings vol.2, pp. 532-529 und B. K. P. Horn, B. G. Schunck, "Determining Optical Flow", Artificial

Intelligence, vol. 17, pp. 185-203, 1981) Bewegungsvektorfelder schätzen und diese anschließend mit geeigneten Stetigkeitskriterien segmentieren (H. Kirchner, "Objektsegmentierung auf der Basis von Verschiebungsvektorfeldern (Object Segmentation based on Motion Vector Fields)", Lehrstuhl f. Informatik 5, Universität Erlangen-Nürnberg, W. Germany, 1987 und W. Tengler, H. Kirchner, A.v. Brandt, "Object segmentation from optical flow field", poster presented at the 5th IEEE Workshop on Multidimensional Signal Processing (MDSP), Noordwijkerhout, Netherlands, Sept. 14-16, 1987).

Ein solches Vorgehen ist grundsätzlich geeignet, die mit der Änderungsdetektion verbundenen Probleme zu umgehen. Eine Hauptschwierigkeit dieses Ansatzes liegt aber darin, daß zur Schätzung von Bewegungsvektorfeldern mit den gewünschten Stetigkeitseigenschaften die Kenntnis der Objektgrenzen eigentlich schon vorausgesetzt werden muß. Diese sollen dem Konzept zufolge aber erst anschließend durch die Segmentierung der Bewegungsvektorfelder gewonnen werden.

Enthält die Szene neben reinen Translationen auch Objekte mit wesentlich rotatorischer Bewegung, ergeben die üblichen Verfahren zur Bewegungsschätzung unbrauchbare Resultate. Deshalb ist die Segmentierung von Bewegungsvektorfeldern zur Analyse von Bildfolgen mit rotierenden Objekten wenig geeignet.

Der vorliegenden Erfindung liegt die Aufgabe zugrunde, ein Verfahren der eingangs genannten Art zu schaffen, das trotz bestehender Kontrastarmut der Bilder einer Bildfolge eine verbesserte Rauschunterdrückung und eine verbesserte Diskriminierung zwischen Bewegtobjekten und nicht von Bewegtobjekten herrührenden Änderungen im Bild, insbesondere durch Beleuchtungsänderungen, ermöglicht.

Die der Erfindung zugrundeliegende Aufgabe wird durch ein Verfahren der eingangs genannten Art und gemäß dem Patentanspruch 1 gelöst.

Vorteilhafte Weiterbildungen der Erfindung sind durch die in den Unteransprüchen angegebenen Merkmale gekennzeichnet.

Im folgenden wird die Erfindung anhand mehrerer Figuren im einzelnen beschrieben. Es zeigen

Fig. 1 einen Ablaufplan des erfindungsgemäßen Verfahrens und
Fig. 2 ein Blockschaltbild mit mehreren Funktionsblöcken zur Durchführung des Verfahrens.

Das erfindungsgemäße Verfahren berechnet aus der Bildfolge $I_k$ eine Folge von Hintergrundbildern $B_k$ (dynamischer Hintergrundspeicher). In diesem Hintergrundspeicher sind alle schnell veränderlichen dynamischen Prozesse unterdrückt. Langsam ablaufende Prozesse und alle statischen Bildinhalte der ursprünglichen Folgen sind jedoch in der Hintergrundfolge unverändert sichtbar.

Unter der Annahme, daß die zu verfolgenden Objekte durch ihre Bewegung Helligkeitsänderungen erzeugen, die schnell veränderlich sind verglichen mit Beleuchtungsänderungen oder Änderungen der Oberflächenreflektivität, z. B. durch Wettereinflüsse, können die bewegten Objekte von den unbewegten Gegenständen und anderen langsamen Helligkeitsänderungen durch Subtraktion der Hintergrundfolge von der ursprünglichen Bildfolge getrennt werden.

Durch Anwendung einer geeigneten Schwelle auf die entsprechende Differenzbildfolge $(D_k) = (I_k - B_k)$, vergl. Fig. 2, wird eine binäre Folge von Objektmasken $(M_k)$ erzeugt, die zunächst noch Rauschpixel enthält, welche jedoch durch Anwendung entsprechender Filter auf übliche Weise eliminiert werden können. Diese Objektmasken unterscheiden sich von den aus Differenzbildern zeitlich benachbarter Bilder der ursprünglichen Folge gewonnen "Frame Difference"-Masken durch folgende Eigenschaften:

1. Unter idealen Bedingungen (völlige Rauschfreiheit, ausreichender Kontrast zwischen den Objekten und dem Hintergrund) entsprechen die Segmente der Objektmasken $(M_k)$ den tatsächlichen Lagen und Formen der bewegten Objekte. Die Form der Segmente hängt insbesondere nicht von der Geschwindigkeit der Objekte ab, wie es bei "Frame Difference"-Masken der Fall ist.

2. Selbst ein völlig homogenes Objekt wird in Lage und Form richtig erkannt, wenn der Helligkeitsunterschied zum Hintergrund groß gegen andere (durch schnelle Prozesse bewirkte) Helligkeitsänderungen ist.

Damit werden die entscheidenden Nachteile der "Frame Difference"-Masken vermieden. Gleichzeitig eignen sich die mittels Hintergrundspeicher erzeugten Objektmasken in idealer Weise zur Schätzung der Bewegungsparameter der zu verfolgenden Objekte. Da ihre Segmente in guter Näherung die Lage und Form der Bewegtobjekte wiedergeben, können sie als Segmente des Bewegungsvektorfeldes aufgefaßt werden. In seinem Inneren ist das Bewegungsvektorfeld näherungsweise konstant, wenn die Objekte überwiegend translatorisch bewegt sind.

Nach dem Berechnen der Objektmaske erfolgt in einem nächsten Schritt die Segmentierung der binären Objektmasken $(M_k)$, vergl. Fig. 1, bei der die Größen und Schwerpunktslagen aller Segmente gleich mitberechnet werden. Deren Werte werden als Meßgrößen für ein lineares Kalman-Filter aufgefaßt, mit dessen Hilfe aus den früheren Größen, Schwerpunktslagen und Geschwindigkeiten der Segmente ihre momentanen Schätzwerte einschließlich deren

Kovarianzen errechnet werden. Durch Mimimierung der Schätzfehler-Kovarianzen wird die richtige Zuordnung der Segmente zwischen zeitlich benachbarten Objektmasken gefunden (Korrespondenzproblem).

Die genaue Bestimmung der Bewegungsvektoren ist nun, ausgehend von den Schätzwerten des Kalman-Filters, durch Matching der Grauwerte innerhalb der Maskensegmente möglich. Die dazu gehörige Funktion braucht nur noch in einer kleinen Umgebung des Schätzwertes für jeden Bewegungsvektor ausgewertet zu werden.

Ist das Korrespondenzproblem erst einmal gelöst und sind die Bewegungsvektoren und ihre richtige Zuordnung zu den Segmenten der Objektmaske bekannt, bereitet die korrekte Gruppierung, vergl. Fig. 1, der Segmente zu Objekten und deren Verfolgung keine Probleme mehr.

Die laufenden Bilder der Folge $I_k$ werden durch die räumlich selektive Mittelung über die Zeit k zur Berechnung des dynamischen Hintergrundspeichers $B_k$ verwendet. Um dabei der Tatsache Rechnung zu tragen, daß in realen Bildfolgen von Außenaufnahmen häufig Helligkeits- und Kontrastschwankungen durch Wettereinflüsse auftreten und daß diese nicht zu einer Abweichung des momentan sichtbaren Hintergrundes von dem gespeicherten Hintergrundbild führen sollen, wird die Mittelung durch folgende Rekursionsgleichung durchgeführt:

$$B_k(p) := (1 - a_{k-1}(p))\ \hat{B}_{k-1}(p) + a_{k-1}(p)\ I_{k-1}(p) \qquad (1)$$

mit der Hilfsgröße (Hintergrundvorhersage)

$$\hat{B}_k(p) := B_k(p) + \gamma(B_k(p) - B_{k-1}(p)) \qquad (2)$$

Hierbei bezeichnet p die Koordinaten eines Punktes in der Bildebene. Die Größe $\gamma$ ist ein Gewichtungsfaktor zwischen 0.0 und 1.0. Wenn $\gamma = 0$ gewählt wird, ist $\hat{B}_k = B_k$, und es handelt sich bei Gl. (1) einfach um eine rekursive Gleichung zur Mittelung über $I_k(p)$. Mit $\gamma \neq 0$ (typ. $\gamma = 0.7$) wird nun zusätzlich die Differenz der letzten beiden Hintergrundbilder, $B_{k-1}$ und $B_{k-2}$ zur Hintergrundvorhersage verwendet, so daß eine allmähliche Aufhellung oder Abdunkelung eines Bildpunktes durch Wettereinflüsse (z. B. Bewölkung) nicht zu einer Abweichung zwischen aktuellem und gespeichertem Hintergrund führen kann. In diesem Falle ist, wie aus Gl. (2) ersichtlich, die Speicherung zweier Bilder, nämlich $B_{k-1}$ und $B_{k-2}$ (oder auch $B_{k-1}$ und die Differenz $\Delta_{k-1} = B_{k-1} - B_{k-2}$) erforderlich.

Die binäre Bildfolge

$$\{a_k(p)\},$$

im folgenden als Hintergrundmaske bezeichnet, dient zur Ausblendung der als bewegt erkannten Bildregionen aus der Folge der Grauwertbilder

$$\{I_k\}.$$

Ihre Berechnung setzt eine möglichst gute Kenntnis der Lage und Form aller Bewegungsobjekte zu den jeweiligen Zeitpunkten voraus, und erfolgt deshalb für jeden Zeitpunkt k erst im letzten Verfahrensschritt (vergl. Fig. 1).

Die Hintergrundmaske hat die folgenden Eigenschaften:

$$a_k(p) = \begin{cases} \alpha & \text{falls p zur Maske eines Bewegtobjekts gehört, und} \\ \beta & \text{ansonsten} \end{cases} \qquad \ldots(3)$$

Die Zahlen $\alpha$ und $\beta$ sind im Hinblick auf die typischen Zeitskalen der zu trennenden dynamischen Prozesse zu wählen. $\beta$ ist so klein zu wählen, daß die Bewegtobjekte im Hintergrund gerade nicht mehr sichtbar sind. Es muß aber groß genug sein, damit das Rauschen nicht in den Hintergrund übernommen wird. Der maximale Wert von $\alpha$ wird ebenfalls durch die Forderung nach einer effektiven Rauschunterdrückung bestimmt. $\alpha$ darf jedoch auch nicht zu klein gewählt werden, weil sonst die Aktualisierung des Hintergrundes durch die laufenden Bilder nicht in ausreichender

Maß gegeben wäre. Je weiter die jeweiligen Grenzen für beide Zahlen auseinanderliegen, je mehr sich also die Zeitskalen der langsamen und der schnellen Prozesse unterscheiden, umso besser gelingt die Trennung der Bewegtobjekte vom langsam veränderlichen Hintergrund.

Liegt (z. B. während der ersten Bilder) noch keine Information über die Lage und Form der bewegten Objekte vor oder ist der Hintergrund (ebenfalls in der Initialisierungsphase) noch völlig unbekannt, wird $a_k(p) = \beta$ für alle Werte p gewählt. Hierdurch wird die Konvergenz der Gleichung (1) beschleunigt, wenn der geschätzte Hintergrund noch zu stark vom wirklichen Hintergrund abweicht.

Zur Detektion der Bewegtobjekte in der ursprünglichen Bildfolge werden in diesem Verfahrensschritt die binären Objektmasken

$$M_k(p) := \begin{Bmatrix} 1 & \text{if} \, |D_k(p) \geq \text{mindif} \\ 0 & \text{else} \end{Bmatrix} \ldots \quad (4)$$

berechnet, wobei $D_k(p) := I_k(p) - \hat{B}_k(p)$ das Differenzbild des laufenden Grauwertbildes zum geschätzten Hintergrund ist. Die so definierten Differenzbilder sind von den üblicherweise verwendeten Differenzen zeitlich benachbarter Grauwertbilder grundsätzlich verschieden. Falls die Differenz zwischen den Grauwerten der Objekte und den von ihnen verdeckten Teilen des Hintergrundes größer ist als die durch das Rauschen verursachten Helligkeitsschwankungen, gibt es einen Wert für mindif in (4), mit dem die Trennung der Objekte vom Hintergrund gelingt. In diesem Fall besteht die Objektmaske $M_k(p)$ aus einer Menge voneinander isolierter Objektsegmente

$$\{S_{k,m}\},$$

deren Schwerpunkte und Größen sich leicht ermitteln lassen. Sie seien im folgenden mit

$$\{x_{k,m}\}$$

bzw.

$$\{g_{k,m}\}$$

bezeichnet.

Die in (4) definierten Objektmasken enthalten im allgemeinen noch Beiträge aus verschiedenen Rauschquellen. Diese Rauschpixel sind von den eigentlichen Objektsegmenten am einfachsten anhand ihrer Größe zu unterscheiden. Das Rauschen kann deshalb durch Löschung derjenigen Segmente, deren Größe eine Schwelle "minsize", vergl. Fig. 2, nicht erreicht, eliminiert werden. Das Eliminieren der Rauschpixel kann parallel zur Segmentierung der Objektmaske durchgeführt werden.

Aus der Objektmaske $M_k(p)$ wird die zur Berechnung des nächsten Hintergrundbildes $B_{k+1}(p)$ benötigte Hintergrundmaske $a_k(p)$ gemäß

$$a_k(p) := \alpha M_k(p) + \beta(1 - M_k(p)) \qquad (5)$$

berechnet.

Über die Kriterien zur Bestimmung der Koeffizienten ist bereits in (1) das Wesentliche ausgesagt. Die räumliche Selektivität der Hintergrundmaske stört besonders während der Initialisierungsphase des Verfahrens und kann am einfachsten durch Wahl eines entsprechend hohen Wertes für "mindif", vergl. Fig. 2, während dieser Phase unterdrückt werden.

Zwei zeitlich benachbarte Objektmasken $M_k(p)$ und $M_{k-1}(p)$ unterscheiden sich hauptsächlich durch die Lage der Objektsegmente und deren Größe, die sich meist zeitlich nur langsam ändert. Aus der Menge der Schwerpunkte

$$\{x_{k,m}\} \text{und} \{x_{k-1,n}\}$$

können in einfacher Weise die Schwerpunktsdifferenzen einander entsprechender Segmente

$$d_{k,m,n} := x_{k,m} - x_{k-1,m} \quad (6),$$

die für die anschließende Bestimmung der Bewegungsvektoren als Startwerte verwendet werden können, berechnet werden.

Die Startvektoren werden nun mit der eigentlichen Bewegungsschätzung durch Matching der zu den Segmenten der Objektmaske gehörenden Grauwerte verbessert. Dies geschieht z. B. durch Minimierung von

$$K_{ij,k}(v) := \frac{\sum_p S\,(p+v,k)S\,(p,k-1)\,|I(p+v,k) - I(p,k-1)|^2}{\sum_p S_j(p+v,k)S_i(p,k-1)} \quad \ldots (7)$$

Die Minimierung von $K_{ij,k}(v)$ erfolgt am besten durch einfache Auswertung der Funktion für alle v aus einer geeignet gewählten Umgebung des Startvektors $d_{k,ij}$. Da der Startvektor bereits eine recht gute Nährung für den exakten Bewegungsvektor ist (falls es überhaupt ein Objekt mit diesem Bewegungsvektor gibt), kann diese Umgebung entsprechend klein gewählt werden. Lokale Minimierungsverfahren (z. B. Newton- oder Gradienten-Verfahren) führen zu unzuverlässigen Ergebnissen, da die Funktion im allgemeinen sehr viele lokale Minima besitzt. Der Vektor $v_{ij}$, für den diese Summe ihr Minimum annimmt, ist der zum Segmentpaar (i,j) gehörige Bewegungsvektor.

Der Vorteil des hier beschriebenen Verfahrens zur Bewegungsschätzung liegt darin, daß die hier zum Matching verwendeten Segmente der Objektmaske - im Gegensatz zu willkürlich gewählten Blöcken - vollständig im Inneren der Objektränder liegen. Das Bewegungsvektorfeld ist demnach im Innern dieser Segmente glatt, im Falle sich rein translatorisch bewegender starrer Körper sogar konstant. Diese Eigenschaft der Segmente der Objektmasken $M_k(p)$ erlaubt die Anwendung des beschriebenen, besonders einfachen Verfahrens zur Bewegungsschätzung.

Das Verfahren eignet sich zur Anwendung auf die Verfolgung von Objekten, die sich neben einer rein translatorischen Bewegung auch noch innerhalb der Bildebene drehen.

In dem allgemeinen Fall mehrerer sich unabhängig bewegender Objekte kann die korrekte Zuordnung der Segmente zwischen zeitlich benachbarten Objektmasken ein schwieriges Problem sein. Objekte können über die Bildränder oder im Inneren des Bildes verschwinden, sich verdecken oder durch ruhende, bisher zum Hintergrund gerechnete Objekte verdeckt werden. Die Zahl der Segmente, die zu einem Objekt gehören, kann zeitlich variieren. So muß nicht jedes Segment einen Nachfolger oder Vorgänger haben, es kann aber auch mehr als einen Vorgänger oder Nachfolger für ein Segment geben.

Dieses Problem ist in der Literatur als Korrespondenzproblem bekannt, und es gibt verschiedene Vorschläge zu seiner Lösung. In dem hier beschriebenen Verfahren soll die bekannte Theorie der Kalman-Filter zur Lösung dieses Problems eingesetzt werden. Die Anwendung der Kalman-Theorie setzt ein lineares System-Modell und eine lineares Meß-Modell in bestimmter Form voraus. Es soll deshalb hier angenommen werden, daß bestimmte Eigenschaften der Segmente der Objektmasken, wie z. B. Schwerpunktslagen, Bewegungsvektoren, Segmentgrößen usw., in ihrer zeitlichen Entwicklung durch das lineare System

$$\vec{x}_1(k) := \vec{x}_1(k-1) + \vec{v}_1(k-1) \quad (8a)$$

$$\vec{y}_1(k) := \vec{x}_1(k-1) \quad (8b)$$

$$\vec{v}_1(k) := \vec{v}_1(k-1) + \vec{w} \quad (8c)$$

$$G_1(k) := G_1(k-1) + \theta \qquad (8d)$$

$$N(k) := N(k-1) + \delta \qquad (8e)$$

beschrieben werden, wobei $\vec{x}_1$ $\vec{v}_1$ den Schwerpunkt bzw. den Bewegungsvektor des Segments 1 bezeichnen, $G_1(k)$ die Größe (Zahl der Pixel) des Segments 1 zum Zeitpunkt k ist und N(k) die Zahl der Segmente in der Objektmaske M(k) bezeichnet. Die System-Rauschgrößen in (8) modellieren den erwarteten Schwankungsbereich der im Mittel als konstant angenommenen Zustandsgrößen, vergl. L. Lewis, Optimal Estimation, Wiley 1986.

Es sind zahlreiche Varianten des System-Modells denkbar, bei denen anstelle einiger Segmenteigenschaften (wie z. B. Größe oder Zahl der Segmente) oder zusätzlich zu diesen andere Zustandsgrößen (z. B. Formfaktoren, Beschleunigungsvektoren, usw.) verwendet werden. Die Kalman-Theorie gibt in jedem Fall ein optimales lineares Filter zur Prädikion der Zustandsgrößen vor und nach deren Messung an. Durch geeignete Wahl der statistischen Eigenschaften (Kovarianzmatrizen) der Modell-Rauschgrößen und des Meßmodells können dabei in bekannter Weise Annahmen z. B. über das erwartete kinematische Verhalten der zu verfolgenden Bewegtobjekte zur Prädiktion der Schwerpunktslagen und Bewegungsvektoren berücksichtigt werden. So wird die Berechnung der Startwerte für die Bewegungsschätzung nach (7) entscheidend verbessert.

In Erweiterung der üblichen Anwendung von Kalman-Filtern kann das Problem der Zuordnung von Segmenten in Objektmasken zu benachbarten Zeitpunkten dadurch gelöst werden, daß für jede mögliche Zuordnung ein eigenes Meßmodell angesetzt wird. Für alle diese Meßmodelle wird dann die Prädiktionsfehler-Kovarianzmatrix aktualisiert. Diejenige Zuordnung der Segmente, die mit den geringsten Prädiktionsfehler-Varianzen einhergeht, wird im allgemeinen die korrekte Zuordnung der Segmente zwischen zeitlich benachbarten Masken sein.

Das erfindungsgemäße Verfahren sieht zur Lösung der beschriebenen Probleme vor, daß eine Folge von binären Objektmasken berechnet wird, deren Segmente die Formen und Lagen der bewegten Objekte wiedergeben, wobei durch Matching dieser Segmente die Bewegungsvektoren der bewegten Objekte ermittelt werden. Außerdem wird eine Folge von Hintergrundbildern durch räumlich selektive und zeitliche rekursive Mittelung der Eingangsbildfolge berechnet, in der die bewegten Objekte nicht enthalten sind, jedoch andere Veränderungen des Hintergrundes, die nicht durch bewegte Objekte verursacht sind, enthalten sind. Desweiteren wird eine Folge von binären Objektmasken durch Binarisierung der Differenzbildfolge aus der Eingangsbildfolge und der Hintergrundbildfolge mit Hilfe einer Schwelle berechnet, deren Werte zur Steuerung der räumlichen Selektivität bei der Berechnung der Hintergrundbildfolge verwendet wird und deren Segmente zusammen mit ihren Größen und Schwerpunktlagen bestimmt werden. Schließlich werden die Bewegungsvektoren der detektierten Objekte durch Minimierung der über die Schnittmenge der verschobenen Maskensegmente gemittelten, quadrierten Grauwertdifferenzen bestimmt, wobei die Differenzen der Schwerpunktvektoren korrespondierender Segmente als Startvektor bei der Minimierung herangezogen werden.

Die erforderliche Rauschunterdrückung in den Objektmasken wird vorteilhafterweise durch Anwendung von Medianfiltern durchgeführt. Der Hintergrund wird an solchen Stellen durch die laufenden Bilder aktualisiert, an denen ein Bewegtobjekt sichtbar ist.

In der Funktion für die Bewegungsschätzung kann anstelle quadrierter Graudifferenzen ein anderes Maß für die Abweichung der Grauwerte zweier Bilder an einer bestimmten Stelle verwendet wird.

Erfindungsgemäß ist außerdem vorgesehen, daß zu dem in der Funktion für die Bewegungsschätzung vorzusehenden Zähler eine geeignet gewählte Konstante addiert wird. Die Prädiktion der Startvektoren für die Bewegungsschätzung erfolgt vorzugsweise durch Verwendung eines Kalman-Filters.

Für jede mögliche Zuordnung der Segmente zwischen benachbarten Objektmasken wird ein entsprechendes Meßmodell (Kalman-Filter) verwendet. Die Auswahl der korrekten Zuordnung wird über die Bewertung der Prädiktionsfehler-Kovarianzmatrizen getroffen, wobei vorzugsweise diejenige Zuordnung gewählt wird, die eine geeignet gewählte Norm der Prädiktionsfehler-Kovarianzmatrizen minimiert.

Vorzugsweise werden erfindungsgemäß nicht nur ein, sondern zwei Hintergrundbilder in einem Hintergrundspeicher aufbewahrt (oder auch ein Hintergrundbild und die Differenz zwischen zwei Hintergrundbildern) oder noch mehr. Zur Berechnung der Hintergrundbilder wird eine auf den gespeicherten Bildern beruhende geeignete Rekursionsformel verwendet, die bewirkt, daß allmähliche Helligkeits- und Kontraständerungen keine Abweichung zwischen dem aktuellen und dem gespeicherten Hintergrundbild zur Folge haben.

Es ist vorgesehen, daß erforderliche Bewertungsgewichte $\alpha$, $\beta$ und $\gamma$ orts- und zeitabhängig adaptiv an die momentane Bildsignalstatistik angepaßt werden, z. B. mit Kalmanfiltern oder mit dem bekannten "Least-Mean-Squares (LMS)"-Algorithmus.

Schließlich kann erfindungsgemäß vorgesehen sein, daß die Bewegungsobjektmasken aus der Differenz zwischen gemessenem Bild und Hintergrundbild in vereinfachter Weise gewonnen werden, nämlich z. B. ohne einen Vergleich

der Intensitätswerte innerhalb der Bewegungsobjektmasken aufeinanderfolgender Bilder und ohne die Berechnung von Bewegungsvektoren.

## Patentansprüche

1. Verfahren zur Detektion bewegter Objekte in digitalen Bildfolgen mit unbewegtem Hintergrund mit folgenden Merkmalen:

   a) aus einer zeitlichen Folge digitaler Bilder (I), welche einem Bildpunkt p zur Zeit k einen Bildwert $\mathbf{I_k(p)}$ zuordnen, wird eine zeitliche Folge digitaler Hintergrundbilder (B), welche einem Bildpunkt p zur Zeit k einen Hintergrundbildwert $\mathbf{B_k(p)}$ zuordnen, ermittelt;
   b) der Hintergrundbildwert $\mathbf{B_k(p)}$ zur Zeit k im Bildpunkt p ergibt sich dabei aus einer gewichteten Kombination

   $$B_k(p)=(1-a_{k-1}(p))\cdot\hat{B}_{k-1}(p)+a_{k-1}(p)\cdot I_{k-1}(p)$$

   von prädizierten Hintergrundbildsignalen $\mathbf{\hat{B}_{k-1}(p)}$ und $\mathbf{I_{k-1}(p)}$, wobei

   - die prädizierten Hintergrundbildsignale $\mathbf{\hat{B}_{k-1}(p)}$ eine gewichtete Kombination

     $$\hat{\mathbf{B}}_{\mathbf{k-1}}(\mathbf{p}) = \sum_{\mathbf{n=1}}^{\mathbf{n'}} \mathbf{b_{k-n}} \cdot \mathbf{B_{k-n}(p)}$$

     aus Hintergrundbildwerten $\mathbf{B_{k-n}(p)}$ zu Zeiten k-n im Bildpunkt p mit $1 \le n \le n' = 1, 2,$ oder 3, ..., etc. sind, und wobei
   - die Gewichtskoeffizienten $\mathbf{a_k(p)}$ nach der Vorschrift

     $$a_k(p) = \begin{Bmatrix} \alpha \text{ falls } M_k(p) = 1 \\ \beta \text{ sonst} \end{Bmatrix} = \begin{Bmatrix} \alpha \text{ falls } |D_k(p)| > \text{mindif} \\ \beta \text{ sonst} \end{Bmatrix}$$

     zu wählen sind,
   - die Kombinationskoeffizienten $\mathbf{b_k}$ so gewählt werden, daß eine allmähliche Aufhellung oder Abdunkelung eines Bildpunktes, z.B. durch Wettereinflüsse nicht zu einer Abweichung zwischen aktuellem und gespeichertem Hintergrund führen kann;

   c) die bewegten Objekte werden durch einen Vergleich der Bilder der ursprünglichen Bildfolge (I) mit den Bildern der Hintergrundbildfolge (B) ermittelt mit Hilfe der Differenzbilder

   $$D_k(p)=I_k(p)-B_k(p)$$

   und der Objektmasken

   $$M_k(p) = \begin{Bmatrix} 1 \text{ für } |D_k(p)| > \text{mindif} \\ 0 \text{ sonst} \end{Bmatrix},$$

   wobei mindif eine Schwelle zur Binarisierung der Differenzbilder ist.

2. Verfahren nach Anspruch 1, bei dem die Gewichtskoeffizienten $\mathbf{a_k(p)}$ wenigstens für einige Zeitpunkte k nach der Vorschrift $\mathbf{a_k(p)}=\beta$ für alle Bildpunkt p gewählt werden.

3. Verfahren nach einem der vorhergehenden Ansprüche, bei dem

$$B_k(p)=(1-a_{k-1}(p))\cdot\hat{B}_{k-1}(p)+a_{k-1}(p)\cdot I_{k-1}(p)$$

und

$$\hat{B}_k(p)=B_k(p)+\gamma\cdot(B_k(p)-B_{k-1}(p)),$$

wobei $\gamma$ eine Zahl zwischen 0 und 1 ist.

**Claims**

1. Method for detecting moving objects in digital image sequences with a stationary background, having the following features:

a) a chronological sequence of digital background images (B), which assign a background image value $\mathbf{B_k(p)}$ to a pixel p at the time k, is determined from a chronological sequence of digital images (I), which assign an image value $\mathbf{I_k(p)}$ to a pixel p at the time k;

b) the background image value $\mathbf{B_k(p)}$ at the time k in the pixel p in this case results from a weighted combination

$$B_k(p)=(1-a_{k-1}(p))\cdot\hat{B}_{k-1}(p)+a_{k-1}(p)\cdot I_{k-1}(p)$$

of predicted background image signals $\mathbf{\hat{B}_{k-1}(p)}$ and $\mathbf{I_{k-1}(p)}$,

- the predicted background image signals $\mathbf{\hat{B}_{k-1}(p)}$ being a weighted combination

$$\hat{B}_{k-1}(p)=\sum_{n=1}^{n'} b_{k-n}\cdot B_{k-n}(p)$$

of background image values $\mathbf{B_{k-n}(p)}$ at times k-n at the pixel p where $1 \le n \le n' = 1, 2, \text{ or } 3, \ldots$, etc., and
- it being possible to select the weighting coefficients $\mathbf{a_k(p)}$ in accordance with the rule

$$a_k(p)=\begin{Bmatrix}\alpha \text{ if } M_k(p)=1\\ \text{else } \beta\end{Bmatrix}=\begin{Bmatrix}\alpha \text{ if } |D_k(p)|>\text{mindif}\\ \text{else } \beta\end{Bmatrix}$$

- the combination coefficients $\mathbf{b_k}$ being selected such that gradual brightening or darkening of a pixel, for example as a result of weather influences, cannot lead to a discrepancy between the current background and the stored background;

c) the moving objects are determined by comparison of the images in the original image sequence (I) with the images in the background image sequence (B) with the aid of the delta images

$$D_k(p)=I_k(p)-B_k(p)$$

and the object masks

$$M_k(p) = \begin{Bmatrix} 1 \text{ for} |D_k(p)| > \text{mindif} \\ \text{else } 0 \end{Bmatrix},$$

mindif being a threshold for digitizing the delta images.

**2.** Method according to Claim 1, in which the weighting coefficients $\mathbf{a_k(p)}$ are selected, at least for a number of times k, in accordance with the rule $\mathbf{a_k(p)=}\beta$ for every pixel p.

**3.** Method according to one of the preceding claims, in which

$$B_k(p)=(1-a_{k-1}(p)) \cdot \hat{B}_{k-1}(p)+a_{k-1}(p) \cdot I_{k-1}(p)$$

and

$$B_k(p)=B_k(p)+\lambda\cdot(B_k(p)-B_{k-1}(p)),$$

$\lambda$ being a number between 0 and 1.

**Revendications**

**1.** Procédé de détection d'objets en mouvement dans des séquences d'images numériques à fond immobile, comportant les caractéristiques suivantes :

a) à partir d'une séquence chronologique d'images numériques (I), lesquelles associent à un point d'image p, à l'instant k, une valeur d'image $I_k(p)$, on calcule une séquence chronologique d'images de fond numériques (B), lesquelles associent à un point d'image p, à l'instant k, une valeur d'image de fond $B_k(p)$ ;
b) on obtient la valeur d'image de fond $B_k(p)$, à l'instant k, au point d'image p, à partir d'une combinaison pondérée

$$B_k(p)=(1-a_{k-1}(p))\cdot\hat{B}_{k-1}(p)+a_{k-1}(p)\cdot I_{k-1}(p)$$

de signaux d'image de fond prédits $\hat{B}_{k-1}(p)$ et $I_{k-1}(p)$,

- les signaux d'image de fond prédits $\hat{B}_{k-1}(p)$ représentant une combinaison pondérée

$$\hat{B}_{k-1}(p) = \sum_{n=1}^{n'} b_{k-n} \cdot B_{k-n}(p)$$

de valeurs d'image de fond $B_{k-n}(p)$, aux instants k-n, au point d'image p, avec $1 \leq n \leq n' = 1, 2$ ou $3,\ldots$, etc., et
- les coefficients de pondération $a_k(p)$ devant être choisis selon la règle

$$a_k(p) = \begin{cases} \alpha \text{ si } M_k(p)=1 \\ \text{sinon } \beta \end{cases} = \begin{cases} \alpha \text{ si } |D_k(p)|>\text{mindif} \\ \text{sinon } \beta \end{cases}$$

- les coefficients de combinaison bk étant choisis de telle sorte qu'un éclaircissement ou obscurcissement progressif d'un point d'image, dû par exemple aux influences atmosphériques, ne puisse pas conduire à un écart entre le fond actuel et le fond enregistré en mémoire ;

c) on détecte les objets en mouvement en comparant les images de la séquence d'image initiale (I) avec les images de la séquence d'images de fond (B), à l'aide des images différentielles

$$D_k(p) = I_k(p) - B_k(p)$$

et des masques d'objets

$$M_k(p) = \begin{cases} 1 \text{ pour } |D_k(p)| > \text{mindif} \\ \text{sinon } 0 \end{cases},$$

mindif représentant un seuil pour la conversion binaire des images différentielles.

**2.** Procédé selon la revendication 1, dans lequel on choisit les coefficients de pondération $a_k(p)$ au moins pour quelques instants k selon la règle $a_k(p) = \beta$, pour tous les points d'image p.

**3.** Procédé selon l'une des revendications précédentes, dans lequel

$$B_k(p) = (1-a_{k-1}(p))\cdot\hat{B}_{k-1}(p) + a_{k-1}(p)\cdot I_{k-1}(p)$$

et

$$\hat{B}_k(p) = B_k(p) + \gamma\cdot(B_k(p) - B_{k-1}(p)),$$

$\gamma$ étant un nombre entre 0 et 1.

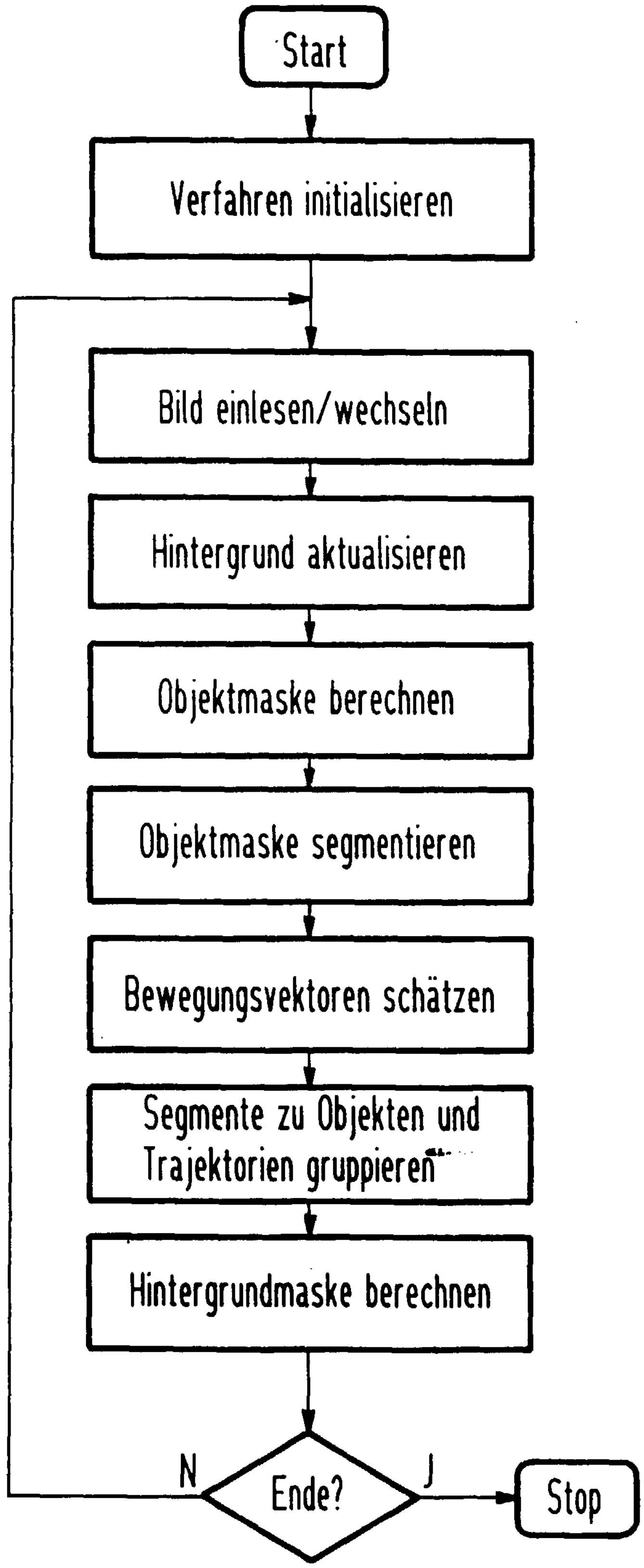
Start
Verfahren initialisieren
Bild einlesen/wechseln
Hintergrund aktualisieren
Objektmaske berechnen
Objektmaske segmentieren
Bewegungsvektoren schätzen
Segmente zu Objekten und Trajektorien gruppieren
Hintergrundmaske berechnen
N
Ende?
J
Stop

FIG 1

FIG 2

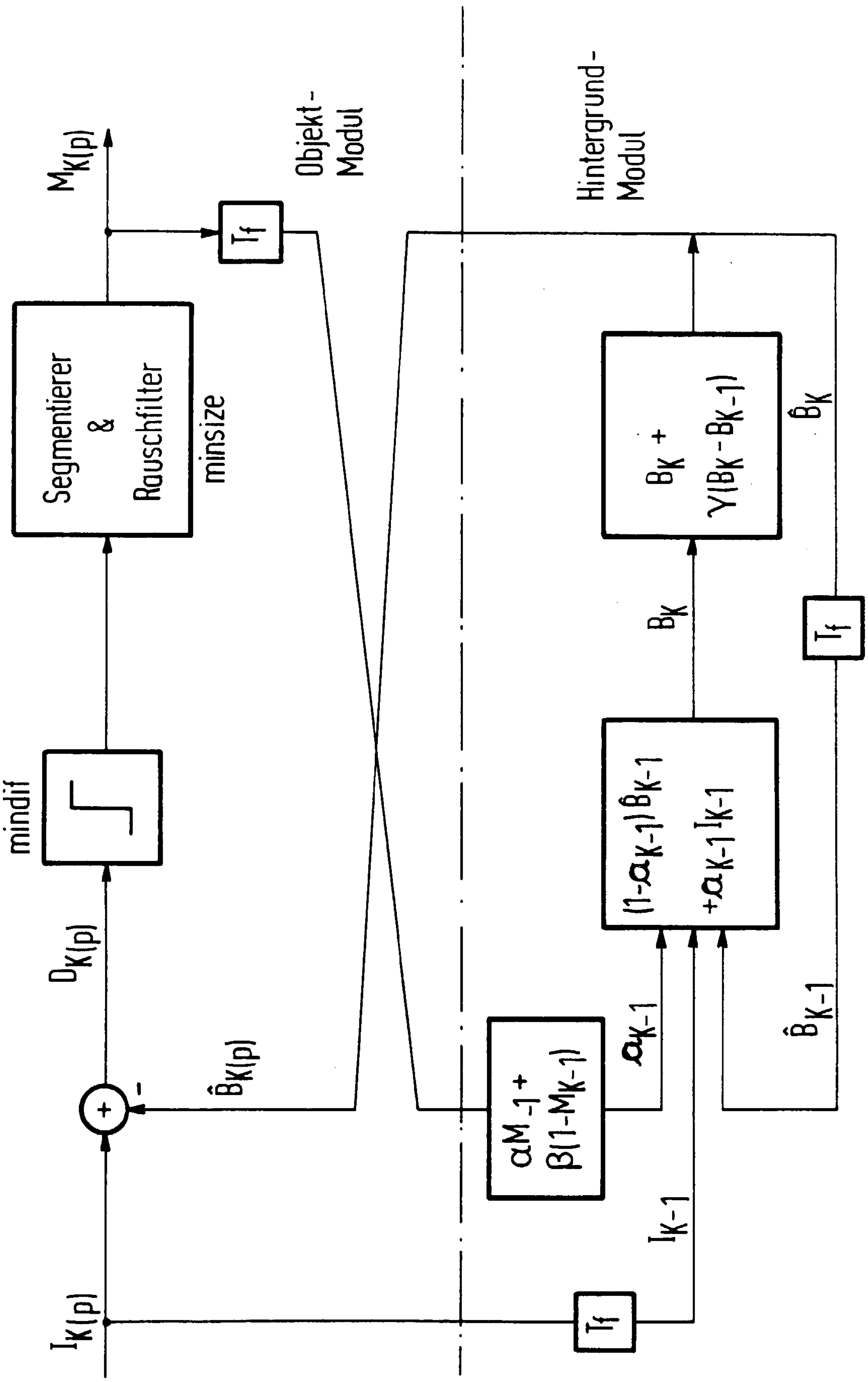
$I_{K(p)}$
$D_{K(p)}$
mindif
Segmentierer
&
Rauschfilter
minsize
$M_{K(p)}$
$T_f$
Objekt-
Modul
Hintergrund-
Modul
$\hat{B}_{K(p)}$
$\alpha M_{-1} +$
$\beta(1-M_{K-1})$
$\alpha_{K-1}$
$I_{K-1}$
$(1-\alpha_{K-1})\hat{B}_{K-1}$
$+\alpha_{K-1} I_{K-1}$
$B_K$
$B_K +$
$\gamma(B_K - B_{K-1})$
$\hat{B}_K$
$\hat{B}_{K-1}$